Europäisches Patentamt

(19) **European Patent Office**

Office européen des brevets

(11) Publication number: **0 027 714**
**B1**

(12) **EUROPEAN PATENT SPECIFICATION**

(45) Date of publication of patent specification: **25.05.83**

(21) Application number: **80303633.4**

(22) Date of filing: **15.10.80**

(51) Int. Cl.³: **F 16 D 65/02,**
**F 16 D 55/224**

(54) Improvements in friction pad assemblies for vehicle disc brakes and in vehicle disc brakes.

(30) Priority: **19.10.79 GB 7936375**

(43) Date of publication of application:
**29.04.81 Bulletin 81/17**

(45) Publication of the grant of the patent:
**25.05.83 Bulletin 83/21**

(84) Designated Contracting States:
**DE FR IT NL**

(56) References cited:
**EP - A - 0 016 682**
**FR - A - 1 340 988**
**FR - A - 1 347 813**
**FR - E - 84 348**
**GB - A - 1 414 915**
**GB - A - 2 001 719**
**GB - A - 2 003 088**

(73) Proprietor: **LUCAS INDUSTRIES public limited company**
**Great King Street**
**Birmingham, B19 2XF (GB)**

(72) Inventor: **Mathias, Christopher Neil**
**67 High Street**
**Henley-in-Arden, Warwickshire (GB)**

(74) Representative: **Spall, Christopher John**
**BARKER, BRETTELL & DUNCAN 138 Hagley Road**
**Edgbaston Birmingham B16 9PW (GB)**

Courier Press, Leamington Spa, England.

Improvements in friction pad assemblies for vehicle disc brakes and in vehicle disc brakes

This invention relates to improvements in friction pad assemblies for vehicle disc brakes, the friction pad assemblies being of the kind comprising a directly actuated friction pad assembly and an indirectly actuated friction pad assembly, in which each friction pad assembly comprises a pad of friction material for engagement with a rotatable disc, and a rigid backing plate carrying the pad.

In known vehicle disc brakes, friction pad assemblies of the kind set forth are adapted to be applied to opposite faces of a rotatable disc, and one of the friction pad assemblies, known as the directly actuated friction pad assembly, is guided for axial sliding movement towards and away from the disc between spaced metal abutment guide surfaces in a stationary member, for example a caliper or a drag-taking member, with which opposite end edges of the backing plate, which is of metal, engage slidably, the other friction pad assembly, known as the indirectly actuated friction pad assembly, being carried by a support, for example a limb of the caliper or a yoke separate from the drag-taking member, which is movable axially with respect to the disc simultaneously with, and in the opposite direction to, movement of the directly actuated friction pad assembly.

In such known vehicle disc brakes, difficulty is experienced in preventing corrosion between the abutment guide surfaces and the directly actuated friction pad assembly, and corrosion between support surfaces on the support, which is of metal and which supports the indirectly actuated pad, and the backing plate of the indirectly actuated pad assembly itself, which is also of metal. Corrosion in both places hinders replacement of the friction pad assemblies, and corrosion between the guide abutment surfaces and the directly actuated pad assembly may lead to seizure of the pad assembly with consequent failure of the brake.

It has been proposed in GB—A—2001719 and GB—A—2003088 to construct the backing plates of friction pad assemblies of the kind set forth entirely from a plastics material or porcelain. Although the nature of these materials assists in reducing corrosion, friction pad assemblies incorporating backing plates of this kind may lack the necessary strength to transmit drag forces, which may often be substantial, particularly when the pad assemblies are supported in a brake over relatively small contact areas, such as occurs when the brake incorporates a yoke in the form of a relatively thin plate. It has also been proposed in FR—A—1347813 to construct a friction pad assembly of the kind set forth incorporating plastics inserts in, or attachments to, the end edges of the pad assembly, said inserts or attachments extending for the entire radial length of the pad assembly. Similarly, it has been proposed in EP—A—0016682 to construct a friction pad assembly of the kind set forth incorporating plastics inserts in the end edges of the pad assembly, said inserts extending continuously for a substantial part of the radial length of the pad assembly. However, in service, the directly actuated friction pad assembly and the indirectly actuated friction pad assembly are subjected to forces which are different in nature, so that different properties are required of the end edges of the pad assemblies in the two different modes of operation. In fact, it would be appropriate to provide pairs of pad assemblies of different constructions commensurate with the nature of the forces to which the pad assemblies are subjected in service. This is obviously not desirable in practice.

It is the aim of the present invention to provide a friction pad assembly which will meet the requirements of both indirectly actuated and directly actuated friction pad assemblies so that a pair of similar pad assemblies can be used in a brake.

According to our invention, in a friction pad assembly of the kind set forth, the backing plate is of greater width than the pad, with the end edges of the backing plate projecting outwardly beyond the edges of the pad, the backing plate being of composite construction comprising a metal plate having end edges in which are provided aligned recesses which extend between opposite faces of the plate, and inserts of plastics material which are fixedly secured in the recesses and have outer edges defining guide surfaces, other guide surfaces being defined by metal regions of the end edges disposed at the ends of the recesses, the recesses and the inserts being so positioned and arranged that, when the friction pad assembly acts as a directly actuated friction pad assembly, the outer edges of the inserts are slidably engageable with complementary abutment guide surfaces in a stationary member, and when the friction pad assembly acts as an indirectly actuated friction pad assembly, the said regions of the end edges of the metal plate itself engage with support surfaces on a support.

Thus friction pad assemblies of identical construction can be used as directly and indirectly actuated friction pad assemblies.

The inserts provide the pad assembly with the necessary means of reducing corrosion between the pad assembly and the abutment guide surfaces, without reducing substantially the effective strength of the backing plate, and by arranging the inserts such that the said portions of the metal plate itself can engage with · the support surfaces on the support, the maximum strength of the metal plate is utilised for withstanding the forces to which the pad assembly will be subjected when it acts as an indirectly actuated friction pad assembly.

When each abutment guide surface in a stationary member comprises a pair of aligned faces which are relatively spaced in a radial direction, two inserts are provided in spaced recesses in each end of the metal plate and the metal regions between the pairs of inserts define the said portions for engagement with the support surfaces.

One embodiment of our invention is illustrated in the accompanying drawings in which:—

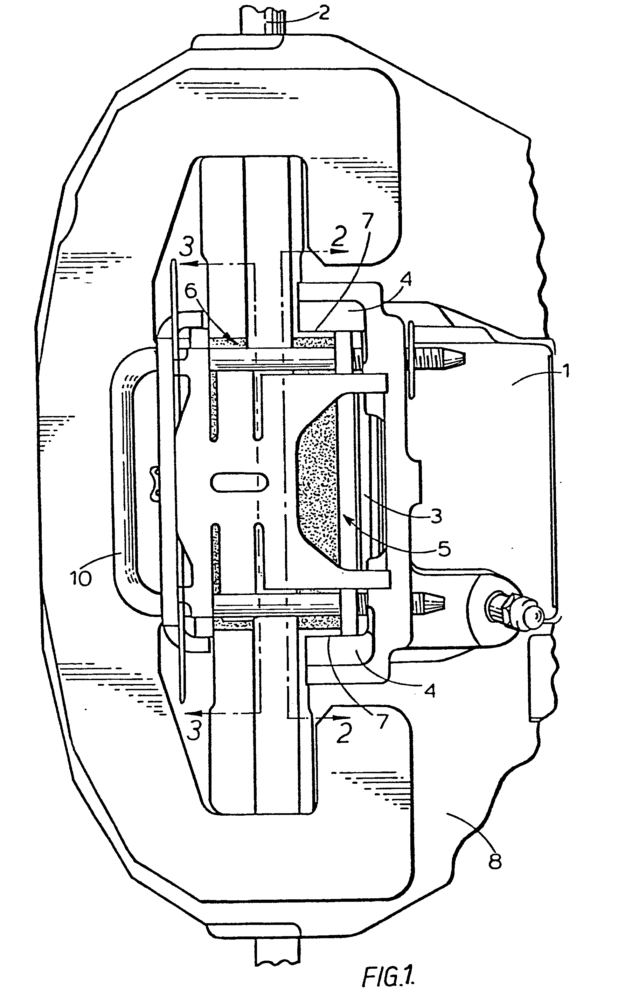

Figure 1 is a plan of a disc brake of the sliding-yoke reaction type for a vehicle;

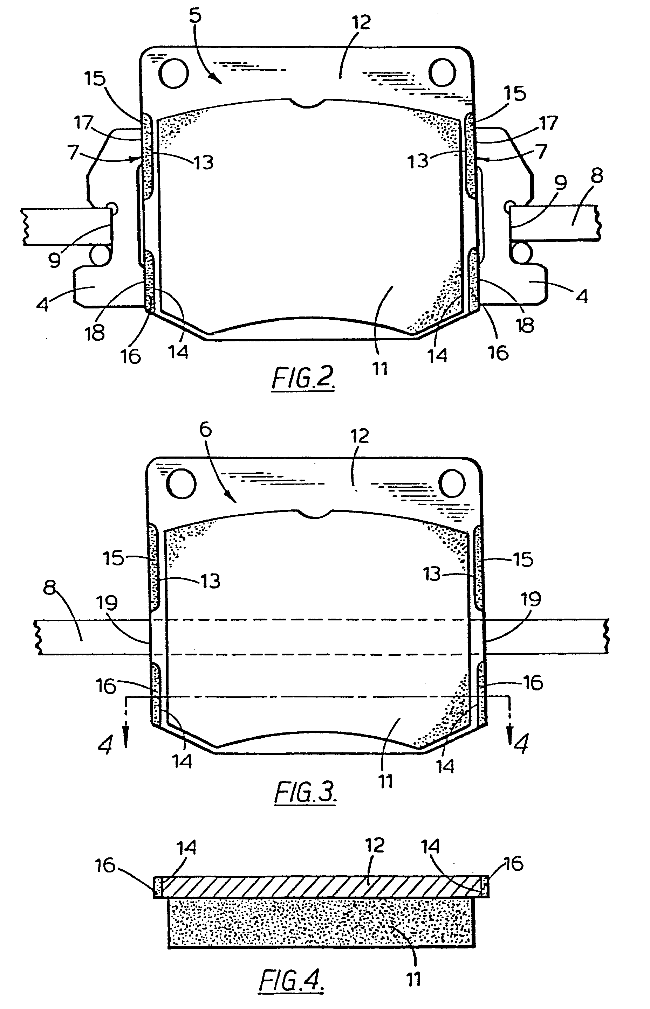

Figure 2 is a section on the line 2—2 of Figure 1;

Figure 3 is a section on the line 3—3 of Figure 1; and

Figure 4 is a section on the line 4—4 of Figure 3.

The disc brake illustrated in the drawings comprises a stationary drag-taking member 1 in the form of a metal casting or forging which is mounted on a stationary part adjacent to one face of an axially fixed rotatable disc 2. The member 1 is provided with an open-ended longitudinally extending cylinder bore in which work inner and outer opposed pistons of which only the free end of the inner piston 3 is shown. The member 1 includes a pair of circumferentially spaced arms 4 which project towards the disc 2 from the inner end of the cylinder bore.

Friction pad assemblies 5 and 6 are provided for engagement with opposite faces of the disc 2.

The pad assembly 5, known as the directly actuated friction pad assembly, is guided for axial movement towards and away from the disc between abutment guide surfaces 7 constituted by parallel radial inner surfaces of the arms 4 and is applied to the disc 2 directly by the inner piston 3.

The pad assembly 6, known as the indirectly actuated pad assembly, is carried by a yoke 8 comprising an outer plate in the form of a closed loop which extends over the peripheral edge of the disc 2. The yoke 8 is guided for axial sliding movement on guiding surfaces 9 in the outer faces of the arms 4. The outer piston acts on the yoke 8 and moves it axially when the space in the bore between the two pistons is pressurised so that the pad assembly 6 is applied to the disc 2 simultaneously with the application to the disc 2 of the pad assembly 5.

Both pad assemblies 5 and 6 are located in the brake against movement in a radial direction by a retaining pin assembly 10.

When the brake is applied, the drag on the pad assembly 5 is taken directly by the arms 4, and the drag on the pad assembly 6 is transmitted to the arms 4 through the yoke 8.

Each friction pad assembly 5, 6 comprises a pad 11 of friction material and a rigid backing plate 12 which carries the pad 11. The backing plate 12 is of greater area than the pad 11 so that the edge of the backing plate 12 projects outwardly from the edges of the pad 11.

Each backing plate 12 is of composite construction and comprises a metal plate which is provided in opposed parallel end edges with pairs of relatively shallow recesses 13, 14 in which inserts 15, 16 of synthetic plastics material are fixedly secured. The location of, and the spacing between, each pair of inserts 15, 16 is chosen to coincide with the radial spacing between radially spaced faces 17, 18 in the abutment guide surfaces 7 so that for the pad assembly 5 the outer edges of the inserts 15, 16, which are aligned with the edges of the plate 12, engage slidably with the faces 17, 18. A plastics material/metal engagement is therefore provided to reduce corrosion between the slidable faces in service. Also, for the pad assembly 6, the yoke 8 engages with the metal regions 19 of the plate 12 which are disposed between adjacent ends of the inserts 15, 16 of each pair. A metal/metal engagement is therefore provided so that the maximum strength of the backing plate 12 is utilised for support and drag-taking purposes.

## Claims

1. A friction pad assembly (5 or 6) for a vehicle disc brake of the type comprising a directly actuated friction pad assembly (5) and an indirectly actuated friction pad assembly (6), in which the friction pad assembly (5 or 6) comprises a pad (11) of friction material, and a rigid backing plate (12) carrying the pad (11), the backing plate (12) being of greater width than the pad (11) with the end edges of the backing plate (12) projecting outwardly beyond the edges of the pad (11), characterised in that the backing plate (12) is of composite construction comprising a metal plate having end edges in which are provided aligned recesses (13, 14) which extend between opposite faces of the plate, and inserts (15, 16) of plastics material which are fixedly secured in the recesses (13, 14) and have outer edges defining guide surfaces, other guide surfaces being defined by metal regions (19) of the end edges disposed at the ends of the recesses (13, 14), the recesses (13, 14) and the inserts (15, 16) being so positioned and arranged that, when the friction pad assembly acts as a directly actuated friction pad assembly (5) the outer edges of the inserts (15, 16) are slidably engageable with complementary abutment guide surfaces (7) in a stationary member (1), and when the friction pad assembly acts as an indirectly actuated pad assembly (6) the said regions (19) of the end edges of the metal plate itself engage with support surfaces on a support (8).

2. A friction pad assembly according to claim 1, characterised in that two spaced recesses (13, 14) are provided in each end of the metal plate, and an insert (15, 16) of plastics material is fixedly secured in each recess (13, 14).

3. A vehicle disc brake comprising friction pad assemblies (5, 6) adapted to be applied to opposite faces of a rotatable disc (2), and one of the friction pad assemblies, known as the directly actuated friction pad assembly (5), is guided for axial sliding movement towards and away from the disc (2) between spaced metal abutment guide surfaces (7) in a stationary member (1), the other friction pad assembly, known as the indirectly actuated friction pad assembly (6), being carried by a support (8) which is movable axially with respect to the disc (2), simultaneously with, and in the opposite direction to the movement of the directly actuated friction pad assembly (5), in which disc brake each friction pad assembly (5, 6) comprises a pad (11) of friction material for engagement with the disc, and a rigid backing plate (12) carrying the pad (11), the backing plate (12) being of greater width than the pad (11) with the end edges of the backing plate (12) projecting outwardly beyond the edges of the pad (11), characterised in that the backing plate (12) is of composite construction comprising a metal plate having end edges in which are provided aligned recesses (13, 14) which extend between opposite faces of the plate, and inserts (15, 16) of plastics material which are fixedly secured in the recesses (13, 14) and have outer edges defining guide surfaces, other guide surfaces being defined by metal regions (19) of the end edges disposed at the ends of the recesses (13, 14), and each abutment guide surface (7) in the stationary member (1) comprises a pair of aligned faces (17, 18) which are relatively spaced in a radial direction and two inserts provided in each end of the metal plate of the directly actuated friction pad assembly (5) are slidably engageable with the aligned faces (17, 18), metal regions between the pairs of inserts (15, 16) of the indirectly actuated friction pad assembly (6) defining portions which engage with the support surfaces.

4. A disc brake according to claim 3, characterised in that both friction pad assemblies (5, 6) are identical in construction.

## Revendications

1. Ensemble de garniture de friction (5 ou 6) pour un frein à disque pour véhicule, du type comprenant un ensemble de garniture de friction directement actionné (5) et un ensemble de garniture de friction indirectement actionné (6), dans lesquels l'ensemble de garniture de friction (5 ou 6) comprend une garniture (11) de matière de friction et un plaque support rigide (12) portant la garniture (11), la plaque support (12) ayant une plus grande largeur que la garniture (11), tandis que les bords d'extrémité de la plaque support (12) font saillie à l'extérieur au-delà des bords de la garniture (11), ledit ensemble étant caractérisé en ce que la plaque support (12) a une structure composite comprenant une plaque métallique dont les bords d'extrémité présentent des évidements alignés (13, 14), qui s'étendent entre les faces opposées de la plaque, et des pièces d'insertion (15, 16) en matière plastique, qui sont attachées de manière fixe dans les évidements (13, 14) et comportent des bords extérieurs définissant des surfaces de guidage, d'autres surfaces de guidage étant définies par des régions métalliques (19) des bords d'extrémité, disposées aux extrémités des évidements (13, 14), les évidements (13, 14) et les pièces d'insertion (15, 16) étant placés et disposés de façon que, lorsque l'ensemble de garniture de friction fonctionne comme ensemble de garniture de friction directement actionné (5), les bords extérieurs des pièces d'insertion (15, 16) peuvent s'appliquer de manière coulissante contre des surfaces de guidage de butée complémentaires (7) d'un organe stationnaire (1) et que lorsque l'ensemble de garniture de friction fonctionne comme ensemble de garniture de friction indirectement actionné (6) lesdites régions (19) des bords d'extrémité de la plaque métallique elle-même s'appliquent contre des surfaces de soutien sur un support (8).

2. Ensemble de garniture de friction selon la revendication 1, caractérisé en ce que deux évidements espacés (13, 14) sont ménagés dans chaque extrémité de la plaque métallique et en ce qu'une pièce d'insertion (15, 16) en matière plastique est attachée de manière fixe dans chaque évidement (13, 14).

3. Frein à disque pour véhicule, comprenant des ensembles de garniture de friction (5, 6) adaptés à être appliqués aux faces opposées d'un disque rotatif (2) et dans lequel l'un des ensembles de garniture de friction, connu comme étant l'ensemble de garniture de friction directement actionné (5), est guidé pour pouvoir prendre un mouvement de coulissement axial de rapprochement et d'écartement du disque (2) entre des surfaces de guidage de butée métalliques espacées (7) d'un organe stationnaire (1), l'autre ensemble de garniture de friction, connu comme étant l'ensemble de garniture de friction indirectement actionné (6) étant porté par un support (8) qui peut se déplacer axialement par rapport au disque (2) en même temps que se déplace en sens opposé l'ensemble de garniture de friction directement actionné (5), frein à disque dans lequel chaque ensemble de garniture de friction (5, 6) comprend une garniture (11) en matière de friction prévue pour s'appliquer contre le disque et une plaque support rigide (12) portant la garniture (11), la plaque support (12) ayant une plus grande largeur que la garniture (11), tandis que les bords d'extrémité de la plaque support (12) font saillie vers l'extérieur au-delà des bords de la garniture (11), ledit frein étant caractérisé en ce que la plaque support (12) a une structure composite comprenant une plaque métallique ayant des bords d'extrémité dans lesquels des évidements alignés (13, 14) sont prévus, évidements qui s'étendent entre les faces opposées de la plaque et des pièces d'insertion (15, 16) en matière plastique qui sont attachées de manière fixe dans les évidements (13, 14) et comportent des bords extérieurs définissant des surfaces de guidage, d'autres surfaces de guidage étant définies par des régions métalliques (19) des bords d'extrémité disposées aux extrémités des évidements (13, 14) et en ce que chaque surface de guidage de butée (7) dans l'organe stationnaire (1) comprend une paire de faces alignées (17, 18) qui sont espacées relativement dans une direction radiale et que deux pièces d'insertion, prévues dans chaque extrémité de la plaque métallique de l'ensemble de garniture de friction directement actionné (5), peuvent s'appliquer de manière coulissante contre les faces alignées (17, 18), les régions métalliques entre les paires de pièces d'insertion (15, 16) de l'ensemble de garniture de friction indirectement actionné (6) définissant des parties qui s'appliquent contre les surfaces de soutien.

4. Frein à disque selon la revendication 3, caractérisé en ce que les deux ensembles de garniture de friction (5, 6) sont de construction identique.

**Patentansprüche**

1. Bremsklötze (5 oder 6) für eine Fahrzeug-Scheibenbremse mit einem direkt betätigten Bremsklotz (5) und einem indirekt betätigten Bremsklotz (6), die je einen Bremsbelag (11) aus Reibstoff und eine den Bremsbelag (11) tragende steife Stützplatte (12) aufweisen, wobei die Stützplatte (12) von größerer Breite als der Bremsbelag (11) ist und die Endränder der Stützplatte (12) nach außen über die Ränder des Bremsbelages (11) hinausragen, dadurch gekennzeichnet, daß die Stützplatte (12) in Verbundkonstruktion ausgeführt ist und eine Platte aus Metall aufweist, bei der in Endrändern miteinander fluchtende Vertiefungen (13, 14) zwischen entgegengesetzten Stirnflächen der Platte ausgebildet sind, und Einsatzstücke (15, 16) aus Kunststoff, die in den Vertiefungen (13, 14) befestigt sind und Führungsflächen bildende Außenränder haben, wobei andere Führungsflächen von metallischen Abschnitten (19) der Endränder an den Enden der Vertiefungen (13, 14) gebildet sind, und dabei die Vertiefungen (13, 14) und die Einsatzstücke (15, 16) so angeordnet und ausgelegt sind, daß, wenn der Bremsklotz als direkt betätigter Bremsklotz (5) wirkt, die Außenränder der Einsatzstücke (15, 16) an komplementäre Anlage- und Führungsflächen (7) in einem fahrzeugfesten Bauteil (1) verschieblich anlegbar sind, und wenn der Bremsklotz als indirekt betätigter Bremsklotz (6) wirkt, sich die Abschnitte (19) der Endränder der Platte aus Metall selbst an Stützflächen eines Trägers (8) anlegen.

2. Bremsklötze nach Anspruch 1, dadurch gekennzeichnet, daß in jedem Ende der Platte aus Metall zwei Vertiefungen (13, 14) mit Zwischenabstand ausgebildet sind und in jeder Vertiefung (13, 14) ein Einsatzstück (15, 16) aus Kunststoff befestigt ist.

3. Fahrzeug-Scheibenbremse mit Bremsklötzen (5, 6), die an entgegegesetzte Stirnflächen einer drehbaren Bremsscheibe (2) anpreßbar sind und von denen der direkt betätigte Bremsklotz (5) zwischen in einem fahrzeugfesten Bauteil (1) mit Zwischenabstand angeordneten Anlage- und Führungsflächen (7) zur Bremsscheibe (2) hin und von ihr weg axial verschieblich geführt ist und der indirekt betätigte Bremsklotz (6) von einem Träger (8) getragen ist, der gleichzeitig mit der Bewegung des direkt betätigten Bremsklotzes (5) und in zu ihr entgegengesetzter Richtung axial in bezug auf die Bremsscheibe (2) bewegbar ist, wobei jeder Bremsklotz (5, 6) einen an die Bremsscheibe (2) anlegbaren Bremsbelag (11) aus Reibstoff und eine den Bremsbelag (11) tragende steife Stützplatte (12) aufweist, die von größerer Breite als der Bremsbelag (11) ist und deren Endränder nach außen über die Ränder des Bremsbelages (11) hinausragen, dadurch gekennzeichnet, daß die Stützplatte (12) in Verbundkonstruktion ausgeführt ist und eine Platte aus Metall aufweist, bei der in Endrändern miteinander fluchtende Vertiefungen (13, 14) zwischen entgegengesetzten Stirnflächen der Platte ausgebildet sind, und Einsatzstücke (15, 16) aus Kunststoff, die in der Vertiefungen (13, 14) befestigt sind und Führungsflächen bildende Außenränder haben, wobei andere Führungsflächen von metallischen Abschnitten (19) der Endränder an den Enden der Vertiefungen (13, 14) gebildet sind, jede Anlage- und Führungsfläche (7) im fahrzeugfesten Bauteil (1) von einem Paar mit radialem Zwischenabstand miteinander fluchtender Stirnflächen (17, 18) gebildet ist, zwei Einsatzstücke, die in jedem Ende der Platte aus Metall des direkt betätigten Bremsklotzes (5) angeordnet sind, an die miteinander fluchtenden Stirnflächen (17, 18) verschieblich anlegbar sind, und Abschnitte aus Metall zwischen den Paaren von Einsatzstücken (15, 16) des indirekt betätigten Bremsklotzes (6) Abschnitte bilden, die sich an die Stützflächen anlegen.

4. Scheibenbremse nach Anspruch 3, dadurch gekennzeichnet, daß beide Bremsklötze (5, 6) von gleichem Aufbau sind.

FIG.1.

*FIG.2.*

*FIG.3.*

*FIG.4.*